# EUROPEAN PATENT APPLICATION

(11) **EP 4 770 013 A1**
(43) Date of publication of application: **01.07.2026**
(21) Application number: 25226594.7
(22) Date of filing: 22.12.2025
(51) Int. Cl.: H04L 9/40, H04L 49/00

(54) **USING ENDPOINT IDENTITY FOR NETWORK DATA FLOW AND TOPOLOGY ORCHESTRATION**

(30) Priority: 30.12.2024 US 202419005426
(71) Applicant: Microsoft Technology Licensing, LLC, Redmond, WA 98052-6399 (US)
(72) Inventor: LLOYD, Joseph Alexander, Redmond, 98052-6399 (US); LUMEN, Gregory Allen, Redmond, 98052-6399 (US); LOWE, Alistair James, Redmond, 98052-6399 (US); JORGENSEN, Nancy Elizabeth, Redmond, 98052-6399 (US); RAY, Mayukh, Redmond, 98052-6399 (US)
(74) Representative: Murgitroyd & Company

(57) **Abstract**

Embodiments relate to a computer-implemented method for managing zero-trust network communications. The method includes validating the identity of a first remote endpoint using a cryptographic credential received from the first endpoint and determining the first endpoint's authorization to communicate with a second remote endpoint. Upon successful validation and authorization, the method initiates the establishment of a network packet route between the first and second remote endpoints. Later, the method further initiates the destruction of the network packet route between the two endpoints.

## Description

### BACKGROUND

Networking forms the backbone of modern digital communication, enabling the exchange of information between devices, systems, and users. At its core, networking relies on establishing connections through addressing schemes such as media access control (MAC) addresses and internet protocol (IP) addresses. These addresses define unique identifiers and routing pathways for the transmission of data packets. The efficient and reliable exchange of these packets ensures that information can flow seamlessly across networks, whether local, wide-area, or global, such as the Internet.

These foundational elements are structured within the open systems interconnection (OSI) model, a conceptual framework that defines how data is transmitted and received through various layers. The OSI model highlights the layered nature of networking, with lower layers-physical, data Link, and network-providing infrastructure for communication. The physical layer governs the transmission of raw bits across physical media, while the data link layer manages error detection and MAC-level addressing for local network segments. The network layer, encompassing IP addressing, establishes routing between devices over diverse and interconnected networks.

While these layers establish the foundation for data movement, higher layers, such as transport and application layers, enable complex interactions like authentication, encryption, and session management. This hierarchical structure underscores that true authentication of users, devices, workloads, or data is implemented at higher layers, relying on the robust connectivity provided by the foundational layers. By building upon the lower layers, higher-level networking protocols and security mechanisms ensure trust and reliability within digital communications. Technologies like secure sockets layer (SSL), transport layer security (TLS), and application-level authentication leverage the underlying MAC and IP address-based routing to deliver secure, verified interactions.

The subject matter claimed herein is not limited to embodiments that solve any disadvantages or that operate only in environments such as those described *supra.* Instead, this background is only provided to illustrate one example technology area where some embodiments described herein may be practiced.

### SUMMARY

The scope of the invention is in accordance with the appended claims.

In some aspects, the techniques described herein relate to methods, systems, and computer program products, including: validating an identity of a first remote endpoint based on a cryptographic credential received from the first remote endpoint; determining that the first remote endpoint is authorized to communicate with a second remote endpoint; initiating an establishment of a network packet route between the first remote endpoint and the second remote endpoint, based on validating the identity of the first remote endpoint, and based on determining that the first remote endpoint is authorized to communicate with the second remote endpoint; and subsequent to the establishment of the network packet route between the first remote endpoint and the second remote endpoint, initiating a destruction of the network packet route between the first remote endpoint and the second remote endpoint.

In some aspects, the techniques described herein relate to methods, systems, and computer program products, including: validating an identity of a first remote endpoint based on a cryptographic credential received from the first remote endpoint; validating a security status of the first remote endpoint, including: attesting the first remote endpoint; and issuing an attestation certificate to the first remote endpoint; determine that the first remote endpoint is authorized to communicate with a second remote endpoint; initiating an establishment of a network packet route between the first remote endpoint and the second remote endpoint, based on validating the identity of the first remote endpoint, and based on determining that the first remote endpoint is authorized to communicate with the second remote endpoint; and subsequent to the establishment of the network packet route between the first remote endpoint and the second remote endpoint, initiating a destruction of the network packet route between the first remote endpoint and the second remote endpoint.

In some aspects, the techniques described herein relate to methods, systems, and computer program products, including: validating a first identity of a first remote endpoint based on a first cryptographic credential received from the first remote endpoint; validating a second identity of a second remote endpoint based on a second cryptographic credential received from the second remote endpoint; determining that the first remote endpoint is authorized to communicate with the second remote endpoint; initiating an establishment of a network packet route between the first remote endpoint and the second remote endpoint, based on validating the first identity of the first remote endpoint and validating the second identity of the second remote endpoint, and based on determining that the first remote endpoint is authorized to communicate with the second remote endpoint; and subsequent to the establishment of the network packet route between the first remote endpoint and the second remote endpoint, initiating a destruction of the network packet route between the first remote endpoint and the second remote endpoint.

This Summary introduces a selection of concepts in a simplified form that are further described below in the Detailed Description. This Summary is not intended to identify key features or essential features of the claimed subject matter, nor is it intended to be used to determine the scope of the claimed subject matter.

### BRIEF DESCRIPTION OF THE DRAWINGS

To describe how the advantages of the systems and methods described herein can be obtained, a more particular description of the embodiments briefly described *supra* is rendered by reference to specific embodiments thereof, which are illustrated in the appended drawings. These drawings depict only typical embodiments of the systems and methods described herein and are not, therefore, to be considered to be limiting in their scope. Systems and methods are described and explained with additional specificity and detail through the use of the accompanying drawings, in which:
Figures 1A and 1B illustrate an example of a network architecture for securely managing a packet route between endpoints in a zero-trust network;
Figure 2 illustrates an example of a network architecture for routing between zero-trust networks;
Figure 3 illustrates an example of an authority computer system for securely managing packet routes between endpoints in zero-trust networks; and
Figure 4 illustrates a flow chart of an example of a method for securely managing a packet route between endpoints in a zero-trust network.

### DETAILED DESCRIPTION

In modern security paradigms, the "zero-trust" model builds upon a layered networking foundation, such as the Open Systems Interconnection (OSI) model, to address evolving cybersecurity challenges. Zero-trust principles include explicit verification based on all available data, such as user identity, device state, application type, and geographic location. The zero-trust model enforces least-privileged access by applying only the minimum trust necessary for any transaction or interaction. By assuming breach as a default stance, zero-trust principles advocate for segmenting networks, users, devices, and applications to limit the scope of potential security incidents and mitigate risk.

Extending the zero-trust model, the embodiments described herein modify the OSI model, and networking wholistically, to use endpoint identity to affect the lowest layers of the network. Using these embodiments, instead of being implicit in the architecture of a network, certain network topologies, including routes between endpoints, exist only after those endpoints have been validated and approved to communicate with one another. In embodiments, these network topologies exist only in response to secure authenticated identity requests being made by secure software application code executing at an endpoint device. Thus, these embodiments decrease trust in the fundamental network, making the network dynamic and responsive to verifiable trust and explicit authorization.

In one example, instead of a conventional network web with largely static routes between devices, a network appliance positioned between endpoint devices creates and destroys network routes between endpoints in response to instructions from an authority that authenticates and authorizes those endpoints, thereby dynamically altering the network topology like a valve controlling the flow of water. While endpoints can include any form of network-connected device, in one example, endpoints include "brownfield" devices (e.g., legacy equipment and legacy software that performs discrete functions in isolation and that are generally considered insecure) and more modern devices running secured workloads (e.g., containers, virtual machines, etc.). In these environments, the secured workloads can communicate with insecure brownfield Internet of Things (IoT) devices over specially created network routes between those secured workloads and loT devices, while network sniffers, intruders, malware, and other data sinks would not even be able to route packets to these devices, since those network routes would not exist.

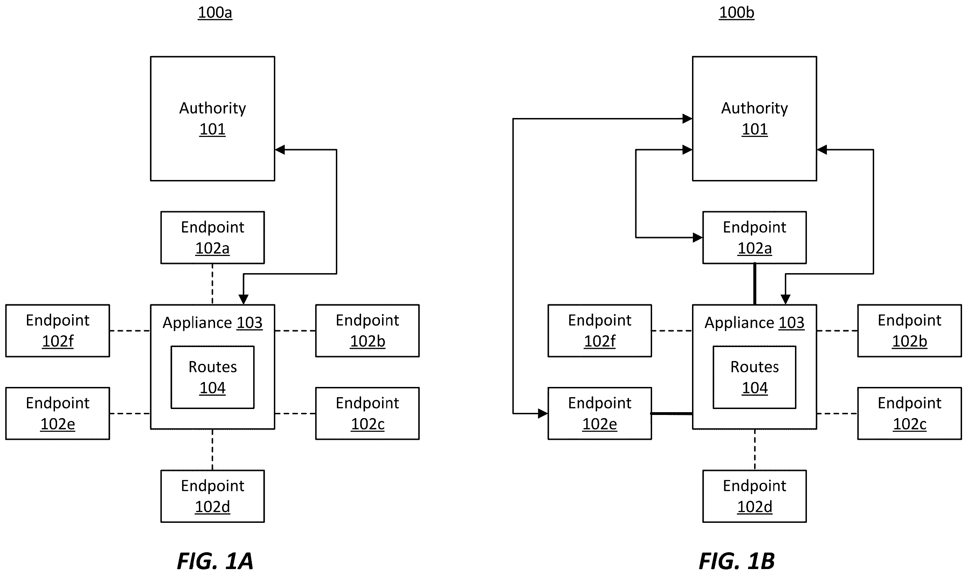

Figures 1A and 1B illustrate examples 100a and 100b, respectively, of a network architecture for securely managing a packet route between endpoints in a zero-trust network. Referring initially to Figure 1A, example 100a shows a network including a plurality of endpoints (e.g., endpoint 102a-102f, though embodiments can operate in networks comprising any number of endpoints) and an appliance 103 that manages routes 104 among the endpoints. Each endpoint can comprise any form of network-connected entity, such as a physical device (e.g., IoT device, smartphone, tablet computer, server, personal computer) or a workload (e.g., virtual machine, container) that is assigned an internet protocol (IP) address. Dashed lines in example 100a represent physical and/or logical network infrastructure that would enable communication (e.g., the exchange of network packets) between any two given endpoints. In example 100a, appliance 103 is illustrated as connected to each of these dashed lines, indicating that appliance 103 manages the use of this network infrastructure by endpoints. In various examples, appliance 103 includes, or manages, one or more of a network router, a network switch, a network gateway, and the like.

While the dashed lines in example 100a represent the presence of a network infrastructure that enables communication among the endpoints, in embodiments, appliance 103 manages routes 104 in a manner that prevents network packet routing over that network infrastructure among endpoints as a default state. Thus, while physical infrastructure (e.g., wires, wireless interfaces) exists to enable communication between endpoints (e.g., endpoint 102a and endpoint 102e in one example), in embodiments, appliance 103 ensures that-as a default state-no route exists in routes 104 (e.g., via routing table(s), via network switch state) that would permit the routing of network packets between those endpoints.

Example 100a also includes an authority 101 that interoperates with the appliance 103 (e.g., as indicated by an arrow that connects the authority 101 and the appliance 103) to create routes between particular endpoints under certain conditions-such as after validation of endpoint identity, after validation of endpoint security, and/or after validation of communication permissions. Referring to Figure 1B, example 100b shows the network of example 100a after authority 101 has interoperated with appliance 103 to establish a packet route between endpoint 102a and endpoint 102e. This packet route is indicated by solid lines that connect endpoint 102a and endpoint 102e with appliance 103. In embodiments, authority 101 also interoperates with appliance 103 to destroy those routes-such as after a particular amount of time has elapsed, after the completion of a communication session, or after the loss of an endpoint security status.

In embodiments, authority 101 initiates the establishment of a route between two given endpoints based on communications with those endpoints. Thus, for example, example 100b uses double-ended arrows to illustrate communication between endpoint 102e and authority 101, and between endpoint 102a and authority 101. In embodiments, even though appliance 103 utilizes a policy of ensuring no routing between endpoints as a default state, appliance 103 does create routes between the endpoints and authority 101 by default, thereby enabling these communications between the endpoints and authority 101.

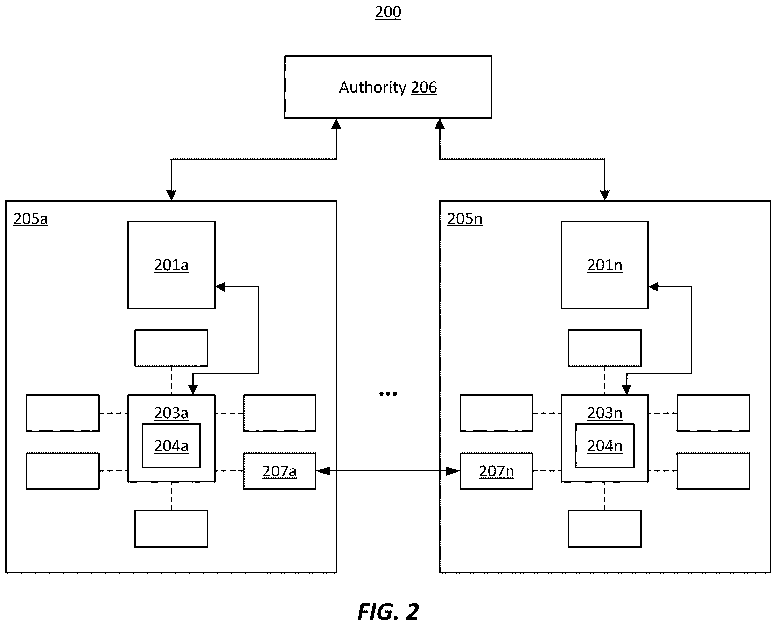

In some embodiments, the authority 101 is a local (e.g., on-premises) authority over a local network and thereby manages the creation and destruction of routes between endpoints within that local network. In other embodiments, authority 101 is an authority over endpoints in a plurality of networks and thereby manages the creation and destruction of routes between endpoints across those networks. For example, Figure 2 illustrates an example 200 of a network architecture for routing between zero-trust networks. In example 200, an authority 206 (e.g., a central authority) is responsible for authenticating endpoints among a plurality of networks, such as network 205a to network 205n. In embodiments, authority 206 is an internetwork appliance that completes/opens connections between endpoints. In these embodiments, authority 206 may function similarly to appliance 103 in examples 100a and 100b. For example, in example 200, an arrow connecting endpoint 207a in network 205a and endpoint 207n in network 205n indicates that authority 206 has opened/created a network communication path (or has facilitated the opening/creation of a network communication path) between endpoint 207a and endpoint 207n.

In some examples, authority 206 is a singular authority that communicates directly with endpoints and network appliances. In other embodiments, authority 206 interoperates with local authorities. In example 200, for instance, each of network 205a and network 205n includes its own local authority (e.g., authority 201a in network 205a, authority 201n in network 205n) and network appliance (e.g., appliance 203a managing routes 204a in network 205a, appliance 203n managing routes 204n in network 205n). Here, endpoints in a given network communicate their local authority, which in turn communicates with authority 206. Hybrid architectures are also possible, e.g., in which one local network includes its own local authority that interoperates with authority 206 on behalf of endpoints and in which another local network lacks a local authority, and its endpoints interoperate directly with authority 206. In example 200, authority 206 directs the establishment and destruction of routes by local network appliances (e.g., appliance 203a, appliance 203n). In additional or alternative embodiments, authority 206 may direct the establishment and destruction of routes by network appliance(s) separate from any of the local networks.

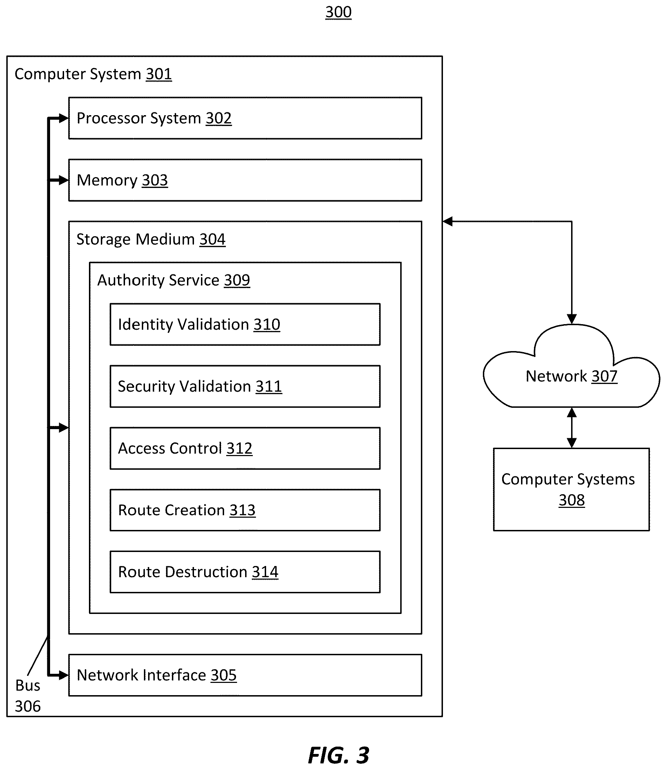

Figure 3 illustrates an example 300 of an authority computer system 301-such as authority 101, authority 201a, authority 201n, or authority 206-for securely managing packet routes between endpoints in zero-trust networks. As shown, authority computer system 301 comprises a processor system 302 (e.g., a single processor or a plurality of processors), a memory 303 (e.g., system or main memory), a storage medium 304 (e.g., a single computer-readable storage medium, or a plurality of computer-readable storage media), and a network interface 305 (e.g., one or more network interface cards), all interconnected by a bus 306. Using network interface 305, authority computer system 301 interconnects via network 307 to computer systems 308 (e.g., a single computer system or a plurality of computer systems, such as endpoints 102a-102f and appliance 103).

In example 300, the storage medium 304 stores computer-executable instructions implementing an authority service 309, which includes an identity validation component 310, a security validation component 311, an access control component 312, a route creation component 313, and a route destruction component 314. In embodiments, the operation of the authority service 309 is triggered by a request from an endpoint, such as one of endpoints 102a-102f.

The identity validation component 310 validates the identity of an endpoint making a request of the authority computer system 301. The particular manner of identity validation can vary from simple (and typically less secure) to advanced (and more typically secure). For example, on the simpler end of the spectrum, identity validation may include validating that the IP address being used by a device matches an expected media access control (MAC) address for the endpoint. This may be useful, for example, for validating legacy devices, such as brownfield loT devices. In another example, on the more advanced end of the spectrum, identity validation may include validating the authenticity and current validity of a cryptographic certificate presented by an endpoint. This may be useful, for example, for validating devices having a modern operating system (OS) and for validating workload-based endpoints such as virtual machines, containers, and the like. In embodiments, identity validation component 310 could perform a single type of identity validation for a given endpoint or could perform multiple types of identity validation for a given endpoint.

The security validation component 311 validates the security status of an endpoint making a request of the authority computer system 301. Similarly to the identity validation component 310, the particular manner of security validation can vary from simple (and less secure) to advanced (and more secure). For example, on the simpler end of the spectrum, security validation may include validating that specific ports are closed on the endpoint or validating a version of software used by the endpoint. On the more advanced end of the spectrum, security validation may include obtaining an attestation certificate issued based on one or more claims provided by the endpoint (e.g., with those claims being based on one or more trusted platform module (TPM) keys at the endpoint, based on a secure boot status of the endpoint, and based on software installed or absent from the endpoint). In one example of attestation-based security validation, the security validation component 311 receives one or more claims from an endpoint and then operates as an attestation service to validate those claims and issue an attestation certificate to the endpoint. In another example of attestation-based security validation, the security validation component 311 receives one or more claims from an endpoint, sends those claims to a separate attestation service, and receives an attestation certificate from the separate attestation service.

Notably, there could be an overlap between the functioning of the identity validation component 310 and the security validation component 311. For example, validating the security status of an endpoint may inherently include validating the identity of the endpoint. Thus, in some embodiments, the identity validation component 310 and the security validation component 311 are a singular component.

In some embodiments, endpoints occasionally request identity and/or security validation by the authority service 309, preparing a given endpoint for communication with other endpoints when needed. For example, an endpoint may request validation every hour, every 12 hours, every 24 hours, etc. In this example, the security validation component 311 may issue a certificate (e.g., an attestation certificate) to the endpoint valid for an hour, 12 hours, 24 hours, etc. In some instances, the identity validation component 310 and/or the security validation component 311 may operate responsive to a validation request by an endpoint separate from a communication request from the endpoint. In other instances, the identity validation component 310 and/or the security validation component 311 operate responsive to a communication request from an endpoint.

Based on an endpoint initiating a communication request, the access control component 312 determines if endpoints are authorized to communicate. For example, the access control component 312 may operate based on rules that explicitly authorize/deny communications between certain sets of endpoints, the access control component 312 may operate based on rules that authorize/deny communications between certain classes of endpoints, and/or the access control component 312 may operate based on rules that authorize/deny communications based on credentials (e.g., cryptographic keys, cryptographic certificates) possessed by different endpoints.

The route creation component 313 initiates the creation of a route between two endpoints when appropriate. For example, in embodiments, the route creation component 313 initiates the creation of a route between two endpoints when each of those endpoints has had its identity validated (identity validation component 310), when each of those endpoints has had its security state validated (security validation component 311), and when those endpoints are determined to be authorized to communicate (access control component 312). In some implementations, the route creation component 313 creates routes directly (e.g., authority 101 may be integrated into appliance 103). In other implementations, the route creation component 313 communicates with a network appliance, such as appliance 103, to instruct appliance 103 to create routes. The manner of route creation can vary depending on network infrastructure an implementation. Some examples include modifying lower-level OSI layers, such as modifying a routing table, modifying a network switch configuration, etc. Other examples include utilizing higher-level OSI layers to create a route, such as by establishing a virtual private network (VPN) tunnel.

In embodiments, routing refers to lower-level routing through specific port assignments, routing table entries, etc., independent of the underlying physical network connections. Additionally, or alternatively, in embodiments, routing is distinguished from a higher-level logical concept of packet direction by a networking device (e.g., which may be driven by optimization algorithms that can be influenced by various factors, such as administrative policies, network conditions, or security requirements). Additionally, while some embodiments utilize existing routing protocols and routing paradigms (e.g., IP/MAC address and port-based routing), others may utilize routing protocols and paradigms that do not yet exist. Examples include the use of routing paradigms in which the physical device moves from "port" to "port" over time (e.g., a satellite routing protocol that sends a packet to a port that relates to the physical position of radio frequency antennae array based on time of day), or where there is some other physical or software abstraction phenomenon.

As described, some embodiments operate on the principle of ensuring no routing between endpoints by default. In some embodiments, this means that the authority service 309 also initiates the destruction of a route. Thus, the route destruction component 314 determines when a route established by the route creation component 313 should no longer exist and initiates the destruction of that route (e.g., by reversing the operation(s) initiated by the route creation component 313 to create the route). In various examples, the route destruction component 314 initiates the destruction of a route between two given endpoints after a defined amount has elapsed since the route's creation, after the conclusion of a communication session between the route's endpoints, or when a security state of one of the route's endpoints has changed (e.g., when an endpoint loses attestation due to expiration of a certificate or a change in software state at the endpoint).

In some embodiments, the authority service 309 facilitates endpoint discovery and/or facilitates endpoint authentication. For example, referring to Figure 1B, endpoint 102e (e.g., a container workload) needs to send data to endpoint 102a (e.g., an loT device). However, endpoint 102e may be unaware of endpoint 102a altogether or be unaware of details of endpoint 102a-such as an IP address of endpoint 102a. In embodiments, when endpoint 102e sends a communication request to authority 101, authority 101 identifies the appropriate endpoint for communication and sends appropriate addressing information (e.g., an IP address of endpoint 102a) to endpoint 102e. In additional or alternative embodiments, authority 101 may send endpoint 102a and/or endpoint 102e information needed to establish or authenticate a network connection with the other endpoint. Such information may include, for example, an attestation certificate of the other endpoint or a public key of the other endpoint.

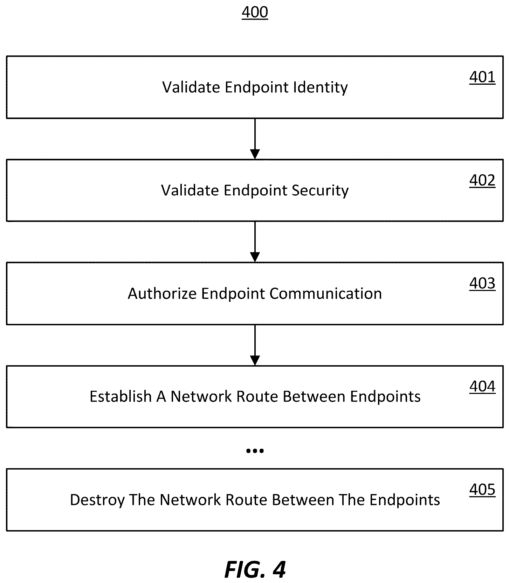

Operation of the authority service 309 is now described in connection with Figure 4, which illustrates a flow chart of an example method 400 for securely managing a packet route between endpoints in a zero-trust network. In embodiments, instructions for implementing method 400 are encoded as computer-executable instructions (e.g., authority service 309) stored on a computer storage medium (e.g., storage medium 304) that are executable by a processor (e.g., processor system 302) to cause a computer system (e.g., authority computer system 301) to perform method 400.

The following discussion now refers to a method and method acts. Although the method acts are discussed in specific orders or are illustrated in a flow chart as occurring in a particular order, no order is required unless expressly stated or required because an act is dependent on another act being completed before the act is performed.

Referring to Figure 4, in embodiments, method 400 comprises act 401 of validating endpoint identity. For example, based on a request from endpoint 102e, the identity validation component 310 operating at authority 101 validates an identity of endpoint 102e, e.g., based on network information (e.g., IP address, MAC address) or cryptography. In some embodiments, identity validation component 310 validates identity based on cryptography, and act 401 comprises validating an identity of a first remote endpoint based on a cryptographic credential received from the first remote endpoint.

Method 400 also comprises act 402 of validating endpoint security. In some embodiments, act 402 comprises validating the security status of the first remote endpoint. For example, based on a request from endpoint 102e (which may be the same request as in act 401 or a different request), the security validation component 311 operating at authority 101 validates a security status of endpoint 102e. In one example, validating the security status of the first remote endpoint comprises attesting the first remote endpoint and issuing an attestation certificate to the first remote endpoint.

In general, method 400 can comprise validating the identity and/or security status of any number of endpoints any number of times. For example, in some instances, endpoints may initiate identity and/or security validation on a cadence, such as every hour, every 12 hours, or every 24 hours. Thus, in embodiments of act 401, the identity is a first identity, and the cryptographic credential is a first cryptographic credential, and method 400 further comprises validating a second identity of the second remote endpoint based on a second cryptographic credential received from the second remote endpoint. For example, the identity validation component 310 also validates an identity of endpoint 102a (e.g., before or after validating the identity of endpoint 102e in act 401). Additionally, in embodiments, method 400 comprises validating the security status of the second remote endpoint.

Method 400 also comprises act 403 of authorizing endpoint communication. In some embodiments, act 403 comprises determining that the first remote endpoint is authorized to communicate with a second remote endpoint and/or determining that the second remote endpoint is authorized to communicate with the first remote endpoint. For example, the access control component 312 uses one or more rules (e.g., based on endpoint identity, endpoint class, and/or credentials possessed by the endpoints) to determine that endpoint 102e and endpoint 102a are authorized to communicate with each other.

Method 400 also comprises act 404 of establishing a network route between endpoints. In some embodiments, act 404 comprises initiating an establishment of a network packet route between the first remote endpoint and the second remote endpoint. For example, based on validating the identity of endpoint 102e and on determining that endpoint 102e is authorized to communicate with endpoint 102a, route creation component 313 establishes a route between those endpoints, as indicated in example 100b by the solid line that connects endpoint 102e with the appliance 103, and the solid line that connects endpoint 102a with the appliance 103.

In some embodiments, initiating the establishment of the network packet route between the first remote endpoint and the second remote endpoint comprises sending a first message to a network appliance, the first message instructing the network appliance to establish the network packet route. For example, authority 101 sends a message to appliance 103, instructing appliance 103 to create a route between endpoint 102e and endpoint 102a. In alternative embodiments, e.g., in which the authority service 309 is integrated into appliance 103, the route creation component 313 establishes the network packet route directly. As mentioned, establishing a network packet route can take any appropriate form, such as modifying a routing table, configuring a network switch, or even establishing a network tunnel (e.g., VPN).

As mentioned, in some embodiments, the authority service 309 facilitates endpoint discovery and/or facilitates endpoint authentication, such as by communicating appropriate addressing information and/or communicating information needed to establish or authenticate a network connection with the other endpoint (e.g., attestation certificate, public key). Thus, in embodiment, method 400 further comprises at least one of sending a first network address of the first remote endpoint to the second remote endpoint, sending a second network address of the second remote endpoint to the first remote endpoint, sending a first certificate or first key associated with the first remote endpoint to the second remote endpoint, or sending a second certificate or second key associated with the second remote endpoint to the first remote endpoint.

Because embodiments operate on the principle of ensuring no routing between endpoints by default, method 400 also comprises act 405 of destroying the network route between the endpoints. In some embodiments, act 405 comprises, subsequent to establishing the network packet route between the first remote endpoint and the second remote endpoint, initiating the destruction of the network packet route between the first remote endpoint and the second remote endpoint. For example, the route destruction component 314 destroys the route between endpoint 102e and endpoint 102a that was established in act 404.

In some embodiments, initiating the destruction of the network packet route between the first remote endpoint and the second remote endpoint comprises sending a second message to the network appliance, the second message instructing the network appliance to destroy the network packet route. For example, authority 101 sends a message to appliance 103, instructing appliance 103 to destroy the route between endpoint 102e and endpoint 102a. In alternative embodiments, e.g., in which the authority service 309 is integrated into appliance 103, the route destruction component 314 destroys the network packet route directly.

An ellipse between act 404 and act 405 indicates that the destruction of a route may not be a direct result of the creation of a route but rather due to some other factor, such as the passage of time, the competition of a communications session, or a change in endpoint security status. Thus, in embodiments of act 405, initiating the destruction of the network packet route between the first remote endpoint and the second remote endpoint is based on at least one of the completion of a communication between the first remote endpoint and the second remote endpoint, elapsing of a predetermined amount of time, or a change in a security status of the first remote endpoint or the second remote endpoint. In embodiments, the route destruction is based on the change in the security status of the first remote endpoint or the second remote endpoint, and the change in the security status is a loss of attestation of the first remote endpoint or the second remote endpoint (e.g., due to the expiration of an endpoint's attestation certificate, or due to a change in software state at the endpoint).

Accordingly, embodiments relate to a computer-implemented method for managing zero-trust network communications. The method includes validating the identity of a first remote endpoint using a cryptographic credential received from the first endpoint and determining the first endpoint's authorization to communicate with a second remote endpoint. Upon successful validation and authorization, the method initiates the establishment of a network packet route between the first and second remote endpoints. Later, the method further initiates the destruction of the network packet route between the two endpoints.

Alternatively, or in addition to the other examples described herein, examples include any combination of the following:
Clause 1. A method implemented in a computer system that includes a processor system, comprising: validating an identity of a first remote endpoint based on a cryptographic credential received from the first remote endpoint; determining that the first remote endpoint is authorized to communicate with a second remote endpoint; initiating an establishment of a network packet route between the first remote endpoint and the second remote endpoint, based on validating the identity of the first remote endpoint, and based on determining that the first remote endpoint is authorized to communicate with the second remote endpoint; and subsequent to the establishment of the network packet route between the first remote endpoint and the second remote endpoint, initiating a destruction of the network packet route between the first remote endpoint and the second remote endpoint.
Clause 2. The method of clause 1, wherein the method further comprises validating a security status of the first remote endpoint.
Clause 3. The method of clause 2, wherein validating the security status of the first remote endpoint comprises: attesting the first remote endpoint; and issuing an attestation certificate to the first remote endpoint.
Clause 4. The method of any of clause 1 to clause 3, wherein: the identity is a first identity, and the cryptographic credential is a first cryptographic credential; and the method further comprises validating a second identity of the second remote endpoint based on a second cryptographic credential received from the second remote endpoint.
Clause 5. The method of any of clause 1 to clause 4, wherein: initiating the establishment of the network packet route between the first remote endpoint and the second remote endpoint comprises sending a first message to a network appliance, the first message instructing the network appliance to establish the network packet route; and initiating the destruction of the network packet route between the first remote endpoint and the second remote endpoint comprises sending a second message to the network appliance, the second message instructing the network appliance to destroy the network packet route.
Clause 6. The method of any of clause 1 to clause 5, wherein the method further comprises at least one of: sending a first network address of the first remote endpoint to the second remote endpoint; sending a second network address of the second remote endpoint to the first remote endpoint; sending a first certificate or first key associated with the first remote endpoint to the second remote endpoint; or sending a second certificate or second key associated with the second remote endpoint to the first remote endpoint.
Clause 7. The method of any of clause 1 to clause 6, wherein the method further comprises: after initiating the establishment of the network packet route between the first remote endpoint and the second remote endpoint, initiating an establishment of a secured network tunnel over the network packet route; and before initiating the destruction of the network packet route between the first remote endpoint and the second remote endpoint, initiating a destruction of the secured network tunnel over the network packet route.
Clause 8. The method of any of clause 1 to clause 7, wherein initiating the destruction of the network packet route between the first remote endpoint and the second remote endpoint is based on at least one of: a completion of a communication between the first remote endpoint and the second remote endpoint; an elapsing of a predetermined amount of time; or a change in a security status of the first remote endpoint or the second remote endpoint.
Clause 9. The method of clause 8, wherein initiating the destruction of the network packet route between the first remote endpoint and the second remote endpoint is based on the change in the security status of the first remote endpoint or the second remote endpoint, and wherein the change in the security status is a loss of attestation of the first remote endpoint or the second remote endpoint.
Clause 10. A computer system, comprising: a processor system; and a computer storage medium that stores computer-executable instructions that are executable by the processor system to at least: validate an identity of a first remote endpoint based on a cryptographic credential received from the first remote endpoint; validate a security status of the first remote endpoint, including: attesting the first remote endpoint; and issuing an attestation certificate to the first remote endpoint; determine that the first remote endpoint is authorized to communicate with a second remote endpoint; initiate an establishment of a network packet route between the first remote endpoint and the second remote endpoint, based on validating the identity of the first remote endpoint, and based on determining that the first remote endpoint is authorized to communicate with the second remote endpoint; and subsequent to the establishment of the network packet route between the first remote endpoint and the second remote endpoint, initiate a destruction of the network packet route between the first remote endpoint and the second remote endpoint.
Clause 11. The computer system of clause 10, wherein: the identity is a first identity, and the cryptographic credential is a first cryptographic credential; and computer-executable instructions are also executable by the processor system to validate a second identity of the second remote endpoint based on a second cryptographic credential received from the second remote endpoint.
Clause 12. The computer system of any of clause 10 or clause 11, wherein: initiating the establishment of the network packet route between the first remote endpoint and the second remote endpoint comprises sending a first message to a network appliance, the first message instructing the network appliance to establish the network packet route; and initiating the destruction of the network packet route between the first remote endpoint and the second remote endpoint comprises sending a second message to the network appliance, the second message instructing the network appliance to destroy the network packet route.
Clause 13. The computer system of any of clause 10 to clause 12, wherein the computer-executable instructions are also executable by the processor system to perform at least one of: send a first network address of the first remote endpoint to the second remote endpoint; send a second network address of the second remote endpoint to the first remote endpoint; send a first certificate or first key associated with the first remote endpoint to the second remote endpoint; or send a second certificate or second key associated with the second remote endpoint to the first remote endpoint.
Clause 14. The computer system of any of clause 10 to clause 13, wherein the computer-executable instructions are also executable by the processor system to: after initiating the establishment of the network packet route between the first remote endpoint and the second remote endpoint, initiating an establishment of a secured network tunnel over the network packet route; and before initiating the destruction of the network packet route between the first remote endpoint and the second remote endpoint, initiating a destruction of the secured network tunnel over the network packet route.
Clause 15. The computer system of any of clause 10 to clause 14, wherein initiating the destruction of the network packet route between the first remote endpoint and the second remote endpoint is based on at least one of: a completion of a communication between the first remote endpoint and the second remote endpoint; an elapsing of a predetermined amount of time; or a change in a security status of the first remote endpoint or the second remote endpoint.
Clause 16. The computer system of clause 15, wherein initiating the destruction of the network packet route between the first remote endpoint and the second remote endpoint is based on the change in the security status of the first remote endpoint or the second remote endpoint, and wherein the change in the security status is a loss of attestation of the first remote endpoint or the second remote endpoint.
Clause 17. A computer storage medium that stores computer-executable instructions that are executable by a processor system to at least: validate a first identity of a first remote endpoint based on a first cryptographic credential received from the first remote endpoint; validate a second identity of a second remote endpoint based on a second cryptographic credential received from the second remote endpoint; determine that the first remote endpoint is authorized to communicate with the second remote endpoint; initiate an establishment of a network packet route between the first remote endpoint and the second remote endpoint, based on validating the first identity of the first remote endpoint and validating the second identity of the second remote endpoint, and based on determining that the first remote endpoint is authorized to communicate with the second remote endpoint; and subsequent to the establishment of the network packet route between the first remote endpoint and the second remote endpoint, initiate a destruction of the network packet route between the first remote endpoint and the second remote endpoint.
Clause 18. The computer storage medium of clause 17, wherein the computer-executable instructions are also executable by the processor system to: validate a first security status of the first remote endpoint; and validate a second security status of the second remote endpoint.
Clause 19. The computer storage medium of any of clause 17 or clause 18, wherein the computer-executable instructions are also executable by the processor system to: issue a first attestation certificate to the first remote endpoint after attesting the first remote endpoint; issue a second attestation certificate to the second remote endpoint after attesting the second remote endpoint; send the first attestation certificate to the second remote endpoint; and send the second attestation certificate to the first remote endpoint.
Clause 20. The computer storage medium of clause 19, wherein initiating the destruction of the network packet route between the first remote endpoint and the second remote endpoint is based on a loss of attestation of the first remote endpoint or the second remote endpoint.

Embodiments of the disclosure comprise or utilize a special-purpose or general-purpose computer system (e.g., authority computer system 301) that includes computer hardware, such as, for example, a processor system (e.g., processor system 302) and system memory (e.g., memory 303), as discussed in greater detail below. Embodiments within the scope of the present disclosure also include physical and other computer-readable media for carrying or storing computer-executable instructions and/or data structures. Such computer-readable media can be any available media accessible by a general-purpose or special-purpose computer system. Computer-readable media that store computer-executable instructions and/or data structures are computer storage media (e.g., storage medium 304). Computer-readable media that carry computer-executable instructions and/or data structures are transmission media. Thus, embodiments of the disclosure can comprise at least two distinctly different kinds of computer-readable media: computer storage media and transmission media.

Computer storage media are physical storage media that store computer-executable instructions and/or data structures. Physical storage media include computer hardware, such as random access memory (RAM), read-only memory (ROM), electrically erasable programmable ROM (EEPROM), solid state drives (SSDs), flash memory, phase-change memory (PCM), optical disk storage, magnetic disk storage or other magnetic storage devices, or any other hardware storage device(s) which store program code in the form of computer-executable instructions or data structures, which can be accessed and executed by a general-purpose or special-purpose computer system to implement the disclosed functionality.

Transmission media include a network and/or data links that carry program code in the form of computer-executable instructions or data structures that are accessible by a general-purpose or special-purpose computer system. A "network" is defined as a data link that enables the transport of electronic data between computer systems and other electronic devices. When information is transferred or provided over a network or another communications connection (either hardwired, wireless, or a combination thereof) to a computer system, the computer system may view the connection as transmission media. The scope of computer-readable media includes combinations thereof.

Upon reaching various computer system components, program code in the form of computer-executable instructions or data structures can be transferred automatically from transmission media to computer storage media (or vice versa). For example, computer-executable instructions or data structures received over a network or data link can be buffered in RAM within a network interface module (e.g., network interface 305) and eventually transferred to computer system RAM and/or less volatile computer storage media at a computer system. Thus, computer storage media can be included in computer system components that also utilize transmission media.

Computer-executable instructions comprise, for example, instructions and data which when executed at a processor system, cause a general-purpose computer system, a special-purpose computer system, or a special-purpose processing device to perform a function or group of functions. In embodiments, computer-executable instructions comprise binaries, intermediate format instructions (e.g., assembly language), or source code. In embodiments, a processor system comprises one or more central processing units (CPUs), one or more graphics processing units (GPUs), one or more neural processing units (NPUs), and the like.

In some embodiments, the disclosed systems and methods are practiced in network computing environments with many types of computer system configurations, including personal computers, desktop computers, laptop computers, message processors, hand-held devices, multi-processor systems, microprocessor-based or programmable consumer electronics, network PCs, minicomputers, mainframe computers, mobile telephones, PDAs, tablets, pagers, routers, switches, and the like. In some embodiments, the disclosed systems and methods are practiced in distributed system environments where different computer systems, which are linked through a network (e.g., by hardwired data links, wireless data links, or by a combination of hardwired and wireless data links), both perform tasks. As such, in a distributed system environment, a computer system may include a plurality of constituent computer systems. Program modules may be located in local and remote memory storage devices in a distributed system environment.

In some embodiments, the disclosed systems and methods are practiced in a cloud computing environment. In some embodiments, cloud computing environments are distributed, although this is not required. When distributed, cloud computing environments may be distributed internally within an organization and/or have components possessed across multiple organizations. In this description and the following claims, "cloud computing" is a model for enabling on-demand network access to a shared pool of configurable computing resources (e.g., networks, servers, storage, applications, and services). A cloud computing model can be composed of various characteristics, such as on-demand self-service, broad network access, resource pooling, rapid elasticity, measured service, and so forth. A cloud computing model may also come in the form of various service models such as Software as a Service (SaaS), Platform as a Service (PaaS), Infrastructure as a Service (laaS), etc. The cloud computing model may also be deployed using different deployment models such as private cloud, community cloud, public cloud, hybrid cloud, etc.

Some embodiments, such as a cloud computing environment, comprise a system with one or more hosts capable of running one or more virtual machines (VMs). During operation, VMs emulate an operational computing system, supporting an OS and perhaps one or more other applications. In some embodiments, each host includes a hypervisor that emulates virtual resources for the VMs using physical resources that are abstracted from the view of the VMs. The hypervisor also provides proper isolation between the VMs. Thus, from the perspective of any given VM, the hypervisor provides the illusion that the VM is interfacing with a physical resource, even though the VM only interfaces with the appearance (e.g., a virtual resource) of a physical resource. Examples of physical resources include processing capacity, memory, disk space, network bandwidth, media drives, and so forth.

Although the subject matter has been described in language specific to structural features and/or methodological acts, it is to be understood that the subject matter defined in the appended claims is not necessarily limited to the described features or acts described supra or the order of the acts described supra. Rather, the described features and acts are disclosed as example forms of implementing the claims.

The present disclosure may be embodied in other specific forms without departing from its essential characteristics. The described embodiments are only illustrative and not restrictive. All changes that come within the meaning and range of equivalency of the claims are to be embraced within their scope.

When introducing elements in the appended claims, the articles "a," "an," "the," and "said" are intended to mean there are one or more of the elements. The terms "comprising," "including," and "having" are intended to be inclusive and mean that there may be additional elements other than the listed elements. Unless otherwise specified, the terms "set," "superset," and "subset" are intended to exclude an empty set, and thus "set" is defined as a non-empty set, "superset" is defined as a non-empty superset, and "subset" is defined as a non-empty subset. Unless otherwise specified, the term "subset" excludes the entirety of its superset (i.e., the superset contains at least one item not included in the subset). Unless otherwise specified, a "superset" can include at least one additional element, and a "subset" can exclude at least one element. This application claims priority from US application 19/005426 filed on December 30, 2024, the entire contents of which are herein incorporated by reference.

## Claims

1. A method implemented in a computer system that includes a processor system, comprising:
validating an identity of a first remote endpoint based on a cryptographic credential received from the first remote endpoint;
determining that the first remote endpoint is authorized to communicate with a second remote endpoint;
initiating an establishment of a network packet route between the first remote endpoint and the second remote endpoint, based on validating the identity of the first remote endpoint, and based on determining that the first remote endpoint is authorized to communicate with the second remote endpoint; and
subsequent to the establishment of the network packet route between the first remote endpoint and the second remote endpoint, initiating a destruction of the network packet route between the first remote endpoint and the second remote endpoint.

2. The method of claim 1, wherein the method further comprises validating a security status of the first remote endpoint.

3. The method of claim 2, wherein validating the security status of the first remote endpoint comprises: attesting the first remote endpoint; and issuing an attestation certificate to the first remote endpoint.

4. The method of claim 1, wherein:
the identity is a first identity, and the cryptographic credential is a first cryptographic credential; and
the method further comprises validating a second identity of the second remote endpoint based on a second cryptographic credential received from the second remote endpoint.

5. The method of claim 1, wherein the method further comprises at least one of:
sending a first network address of the first remote endpoint to the second remote endpoint;
sending a second network address of the second remote endpoint to the first remote endpoint;
sending a first certificate or first key associated with the first remote endpoint to the second remote endpoint; or
sending a second certificate or second key associated with the second remote endpoint to the first remote endpoint.

6. A computer system, comprising:
a processor system; and
a computer storage medium that stores computer-executable instructions that are executable by the processor system to at least:
validate an identity of a first remote endpoint based on a cryptographic credential received from the first remote endpoint;
validate a security status of the first remote endpoint, including:
attesting the first remote endpoint; and
issuing an attestation certificate to the first remote endpoint;
determine that the first remote endpoint is authorized to communicate with a second remote endpoint;
initiate an establishment of a network packet route between the first remote endpoint and the second remote endpoint, based on validating the identity of the first remote endpoint, and based on determining that the first remote endpoint is authorized to communicate with the second remote endpoint; and
subsequent to the establishment of the network packet route between the first remote endpoint and the second remote endpoint, initiate a destruction of the network packet route between the first remote endpoint and the second remote endpoint.

7. The computer system of claim 6, wherein:
the identity is a first identity, and the cryptographic credential is a first cryptographic credential; and
computer-executable instructions are also executable by the processor system to validate a second identity of the second remote endpoint based on a second cryptographic credential received from the second remote endpoint.

8. The method of claim 1 or computer system of claim 6, wherein:
initiating the establishment of the network packet route between the first remote endpoint and the second remote endpoint comprises sending a first message to a network appliance, the first message instructing the network appliance to establish the network packet route; and
initiating the destruction of the network packet route between the first remote endpoint and the second remote endpoint comprises sending a second message to the network appliance, the second message instructing the network appliance to destroy the network packet route.

9. The computer system of claim 6, wherein the computer-executable instructions are also executable by the processor system to perform at least one of:
send a first network address of the first remote endpoint to the second remote endpoint;
send a second network address of the second remote endpoint to the first remote endpoint;
send a first certificate or first key associated with the first remote endpoint to the second remote endpoint; or
send a second certificate or second key associated with the second remote endpoint to the first remote endpoint.

10. The method of claim 1 wherein the method further comprises, or computer system of claim 6, wherein the computer-executable instructions are also executable by the processor system to:
after initiating the establishment of the network packet route between the first remote endpoint and the second remote endpoint, initiating an establishment of a secured network tunnel over the network packet route; and
before initiating the destruction of the network packet route between the first remote endpoint and the second remote endpoint, initiating a destruction of the secured network tunnel over the network packet route.

11. The method of claim 1 or the computer system of claim 6, wherein initiating the destruction of the network packet route between the first remote endpoint and the second remote endpoint is based on at least one of:
a completion of a communication between the first remote endpoint and the second remote endpoint; an elapsing of a predetermined amount of time; or a change in a security status of the first remote endpoint or the second remote endpoint.

12. The method of claim 11 or the computer system of claim 11, wherein initiating the destruction of the network packet route between the first remote endpoint and the second remote endpoint is based on the change in the security status of the first remote endpoint or the second remote endpoint, and wherein the change in the security status is a loss of attestation of the first remote endpoint or the second remote endpoint.

13. A computer storage medium that stores computer-executable instructions that are executable by a processor system to at least:
validate a first identity of a first remote endpoint based on a first cryptographic credential received from the first remote endpoint;
validate a second identity of a second remote endpoint based on a second cryptographic credential received from the second remote endpoint;
determine that the first remote endpoint is authorized to communicate with the second remote endpoint;
initiate an establishment of a network packet route between the first remote endpoint and the second remote endpoint, based on validating the first identity of the first remote endpoint and validating the second identity of the second remote endpoint, and based on determining that the first remote endpoint is authorized to communicate with the second remote endpoint; and
subsequent to the establishment of the network packet route between the first remote endpoint and the second remote endpoint, initiate a destruction of the network packet route between the first remote endpoint and the second remote endpoint.

14. The computer storage medium of claim 13, wherein the computer-executable instructions are also executable, according to at least one of the following, by the processor system to:
(i) validate a first security status of the first remote endpoint; and validate a second security status of the second remote endpoint;
(ii) issue a first attestation certificate to the first remote endpoint after attesting the first remote endpoint;
issue a second attestation certificate to the second remote endpoint after attesting the second remote endpoint;
send the first attestation certificate to the second remote endpoint; and
send the second attestation certificate to the first remote endpoint.

15. The computer storage medium of claim 14, wherein initiating the destruction of the network packet route between the first remote endpoint and the second remote endpoint is based on a loss of attestation of the first remote endpoint or the second remote endpoint.
